# EUROPEAN PATENT APPLICATION

(11) **EP 4 085 997 A1**
(43) Date of publication of application: **09.11.2022**
(21) Application number: 20908711.3
(22) Date of filing: 30.12.2020
(51) Int. Cl.: B01J 23/46, B01J 37/16, C01B 3/04, C01G 55/00

(54) **RUTHENIUM PRECURSOR, AMMONIA REACTION CATALYST USING SAME, AND PREPARATION METHOD THEREFOR**

(30) Priority: 30.12.2019 KR 20190177727
(71) Applicant: Wonik Materials Co.,ltd., Cheongju-si, Chungcheongbuk-do 28116 (KR); Korea Institute of Science and Technology, Seoul 02792 (KR)
(72) Inventor: CHO, Byeong Ok, Seoul 05272 (KR); KIM, Young Lae, Cheongju-si, Chungcheongbuk-do 28165 (KR); JUNG, Suk Yong, Cheongju-si, Chungcheongbuk-do 28124 (KR); LEE, Sung Hun, Cheongju-si, Chungcheongbuk-do 28317 (KR); PARK, Sae Mi, Pyeongtaek-si, Gyeonggi-do 17856 (KR); PARK, Myung Gon, Cheongju-si, Chungcheongbuk-do 28115 (KR); KANG, Min Soo, Sejong 30098 (KR); YOON, Chang Won, Seoul 02792 (KR); SOHN, Hyun Tae, Seoul 02792 (KR); CHA, Jun Young, Seoul 02792 (KR); LEE, Tae Ho, Seoul 02792 (KR)
(74) Representative: ABG Intellectual Property Law, S.L.
(86) International application number: PCT/KR2020/019461
(87) International publication number: WO 2021/137643

(57) **Abstract**

The present invention relates to a ruthenium precursor compound, and more particularly, to a ruthenium precursor compound which is for providing ruthenium to an ammonia decomposition reaction catalyst and is represented by Formula CₓH_{y}O_{z}NₘRuₙ, wherein x is an integer of 3 to 20, y is an integer of 0 to 32, z is an integer of 0 to 20, m is an integer of 0 to 10, and n is an integer of 1 to 3. In addition, the present invention relates to an ammonia reaction catalyst using the ruthenium precursor, and to a method for preparing the ammonia reaction catalyst, and provides an ammonia reaction catalyst having an excellent ammonia conversion rate at low temperatures, thereby being capable of efficient hydrogen production.

## Description

### [Technical Field]

The present invention relates to a ruthenium precursor compound, and more particularly, to a ruthenium precursor compound for providing ruthenium to an ammonia decomposition reaction catalyst, and a method for preparing a ruthenium-based ammonia reaction catalyst using the same.

### [Background Art]

Fossil fuels are currently the most widely used resource, but the indiscriminate use of the fossil fuels causes the emerging problem of global warming. Therefore, research and development of clean energy sources is considered important, and various studies are underway, especially on the production and utilization of hydrogen.

When a fuel cell is driven by using hydrogen, it is not only environmentally friendly, but also energy conversion efficiency that is 2 to 3 times that of a conventional internal combustion engine may be expected. Therefore, in the future, hydrogen is expected to be applied to various fields such as electricity production through fuel cells, automobiles, and ships.

Representative examples of hydrogen produced by a current hydrogen production technology include fossil fuel-based by-product hydrogen, extracted hydrogen, and renewable energy-based water electrolyzed hydrogen. A representative method for producing extracted hydrogen obtained based on fossil fuels includes a method for producing a mixed gas of hydrogen and carbon monoxide by utilizing a steam reforming reaction, and then separating and purifying the mixed gas to produce hydrogen, but the method does not comply with a decarbonization policy from a long-term perspective.

Meanwhile, ammonia can be decomposed only with nitrogen and hydrogen as shown in the following reaction formula, and thus, does not cause environmental problems, unlike hydrogen production through the decomposition of fossil fuels, so that there is a need for active research on ammonia.

2NH₃ ↔ 3H₂ + N₂, ΔH = 46 kJ/mol

Japanese Registration Patent No. 5778309 discloses a method of using a catalyst including cobalt or nickel, and a metal compound in producing hydrogen by decomposing ammonia, and Korean Registration Patent No. 1938333 discloses a square platinum nanoparticle as a catalyst for an ammonia oxidation reaction. In addition, Korea Registration Patent No. 1924952 discloses a catalyst for producing hydrogen from ammonia, the catalyst including a metal such as ruthenium, but research on a ruthenium precursor which is essential for preparing such a ruthenium-containing catalyst is insufficient.

### [Disclosure]

### [Technical Problem]

The present invention provides a ruthenium precursor compound, which is a ruthenium precursor compound for providing ruthenium to an ammonia decomposition reaction catalyst.

The present invention also provides a method for preparing an ammonia decomposition reaction catalyst by using the ruthenium precursor compound.

In addition to the foregoing clear objectives, the present invention may aim at achieving other objectives that can be easily derived by those skilled in the art from the general description of the present specification.

### [Technical Solution]

In accordance with an exemplary embodiment, the present invention provides a ruthenium precursor compound, which is a ruthenium precursor compound for providing ruthenium to an ammonia decomposition reaction catalyst, wherein the ruthenium precursor is represented by Formula 1 below.

[Formula 1] CxHyOzNmRUn

In Formula 1 above, x is an integer of 3 to 20, y is an integer from 0 to 32, z is an integer from 0 to 20, m is an integer from 0 to 10, and n is an integer from 1 to 3.

In addition, the ruthenium precursor may include a carbonyl group, an ester group, a carboxyl group, nitrile, a nitro group, an amine group, or a carboxylate.

In addition, the ruthenium precursor may not include a halogen element.

In addition, in the ruthenium precursor, at least one carbonyl may be directly bonded to ruthenium.

In addition, when the y and the m are 0, x=z may be satisfied.

In addition, the ruthenium precursor may be selected from the group consisting of ruthenium pentacarbonyl, triruthenium dodecacarbonyl, ruthenium(III) nitrosyl nitrate, ruthenium(III) acetylacetonate, and a mixture thereof.

In addition, in the ruthenium precursor, ruthenium may form a coordination bond with at least one compound among an unsaturated compound, an aromatic compound, and a nitrogen oxide.

In addition, the ruthenium precursor may be selected from the group consisting of ruthenocene, a ruthenium(III) nitrosyl nitrate solution, bis (ethylcyclopentadienyl) ruthenium(II), bis(ethylcyclopentadienyl)ruthenium(II), bis(cyclopentadienyl)ruthenium(II), bis(2,4-dimethylpentadienyl)ruthenium(II), bis(cyclopentadienylruthenium dicarbonyl) dimer, octamethylruthenocene, ruthenium formate, ruthenium acetate, ruthenium propionate, ruthenium butyrate, tris(acetylacetonate)ruthenium and a mixture thereof.

In addition, the ammonia decomposition reaction catalyst may include a support doped with a lanthanoid.

In addition, the lanthanoid may be selected from the group consisting of lanthanum, cerium, and a mixture thereof.

In addition, the support may be selected from the group consisting of SiO₂, CeO₂, ZrO₂, TiO₂, MgO, Al₂O₃, V₂O₅, Fe₂O₃, Co₃O₄, Ce-ZrOₓ, MgO-Al₂O₃, and a mixture thereof.

In addition, the ammonia decomposition reaction catalyst may be lanthanum aluminate.

In accordance with another exemplary embodiment, the present invention provides a method for preparing a ruthenium-based ammonia decomposition reaction catalyst, the method including:
(A) preparing a ruthenium precursor solution by dissolving a ruthenium precursor represented by Formula 1 below in a solvent; and
(B) mixing a catalyst support and the ruthenium precursor solution to provide ruthenium to the catalyst support:

   [Formula 1] CₓH_{y}O_{z}NₘRuₙ

   wherein X is an integer of 3 to 20, y is an integer of 0 to 32, z is an integer of 0 to 20, m is an integer of 0 to 10, and n is an integer of 1 to 3.

In addition, the ruthenium precursor may include a carbonyl group, an ester group, a carboxyl group, nitrile, a nitro group, an amine group, or a carboxylate.

In addition, in the ruthenium precursor, at least one carbonyl may be directly bonded to ruthenium.

In addition, when the y and the m are 0, it may be x=z.

In addition, the ruthenium precursor may be selected from the group consisting of ruthenium pentacarbonyl, triruthenium dodecacarbonyl, ruthenocene, a ruthenium(III) nitrosyl nitrate solution, bis (ethylcyclopentadienyl) ruthenium (II), bis(ethylcyclopentadienyl)ruthenium(II), bis(cyclopentadienyl)ruthenium(II), bis(2,4-dimethylpentadienyl)ruthenium(II), bis(cyclopentadienylruthenium dicarbonyl) dimer, octamethylruthenocene, ruthenium(III) nitrosyl nitrate, ruthenium(III) acetylacetonate and a mixture thereof.

In addition, in the ruthenium precursor, ruthenium may form a coordination bond with at least one compound among an unsaturated compound, an aromatic compound, and a nitrogen oxide.

In addition, the ruthenium precursor may be selected from the group consisting of ruthenium formate, ruthenium acetate, ruthenium propionate, ruthenium butyrate, tris(acetylacetonate) ruthenium, and a mixture thereof.

In addition, the solvent may be selected from the group consisting of water, hexane, toluene, and a mixture thereof.

In addition, the catalyst support may include a lanthanoid.

In addition, the lanthanoid may be selected from the group consisting of lanthanum, cerium, and a mixture thereof.

In addition, the catalyst support may be selected from the group consisting of SiO₂, CeO₂, ZrO₂, TiO₂, MgO, Al₂O₃, V₂O₅, Fe₂O₃, Co₃O₄, Ce-ZrOₓ, MgO-Al₂O₃, and a mixture thereof.

In addition, the catalyst support may be lanthanum aluminate.

In addition, the catalyst support may be a powder type, a pellet type, or a monolith type.

In addition, after Step (B), (C) removing liquid components by bathing may be further included.

In addition, Step (C) may be performed under the condition of 10 to 100°C, preferably 30 to 90°C, and more preferably 40 to 80°C.

In addition, after Step (C), (D) drying may be further included.

In addition, Step (D) may be performed under the condition of 50 to 200°C, preferably 80 to 150°C, and more preferably 100 to 120°C.

In addition, the ruthenium-based ammonia decomposition reaction catalyst may include 100 molar parts of a ruthenium-based ammonia decomposition reaction catalyst, and 0.1 to 100 molar parts, preferably 2 to 60 molar parts, and more preferably 5 to 30 molar parts of lanthanum.

Meanwhile, the ammonia decomposition reaction catalyst of the present invention is characterized by being prepared according to the method for preparing a ruthenium-based ammonia decomposition reaction catalyst.

In addition, the ruthenium-based ammonia decomposition reaction catalyst may include 100 parts by weight of a ruthenium-based ammonia decomposition reaction catalyst, and 0.01 to 5 parts by weight, preferably 0.02 to 3 parts by weight, and more preferably 0.1 to 2 parts by weight of ruthenium.

In addition, the ruthenium-based ammonia decomposition reaction catalyst may exhibit an ammonia conversion rate of 65 to 100%, preferably 72 to 100%, more preferably 76.5 to 100% under the following reaction conditions.

### [Reaction conditions]

Experimental temperature (°C): 350 to 650°C
Reducing gas: 4 to 50% H₂/N₂
GHSV (ml/h · g_{cat}) : 1,000 to 100,000

### [Advantageous Effects]

A ruthenium precursor compound according to the present invention may prevent corrosion inside a reactor and deterioration in durability of a device since hydrogen chloride is not produced during the reduction treatment of a ruthenium precursor.

In addition, an ammonia decomposition reaction catalyst according to the present invention has excellent thermal stability, and thus, may suppress sintering at high temperatures and inhibit the growth of a ruthenium metal to maintain a large surface area, so that the performance thereof as a catalyst is excellent.

In addition, a method for preparing an ammonia decomposition reaction catalyst according to the present invention is a method of introducing ruthenium into an ammonia decomposition reaction catalyst using the ruthenium precursor, and the ammonia decomposition reaction catalyst prepared thereby has a very excellent ammonia conversion rate, and thus, has significantly improved performance in producing hydrogen.

### [Description of Drawings]

FIG. 1 shows catalyst performance evaluation results according to Examples and Comparative Examples of the present invention.
FIG. 2 shows a gasket and the inside of a reactor contaminated by a typical reduction treatment of a ruthenium precursor.
FIG. 3 is an image of a catalyst before an ammonia reaction according to Examples and Comparative Examples of the present invention.
FIG. 4 is an image of a catalyst after an ammonia reaction according to Examples and Comparative Examples of the present invention.
FIG. 5 is Ru metal sintering observation results according to the reduction temperature of a catalyst according to Comparative Examples of the present invention.
FIG. 6 is Ru metal sintering observation results according to the reduction temperature of a catalyst according to Examples of the present invention.
FIG. 7 is TEM-EDS observation results of Ru metal sintering according to the reduction temperature of a catalyst according to Comparative Examples of the present invention.
FIG. 8 is TEM-EDS observation results of Ru metal sintering according to the reduction temperature of a catalyst according to Examples of the present invention.
FIG. 9 is Ru metal sintering observation results according to the reduction of a catalyst, a Comparative Example of the present invention.
FIG. 10 is Ru metal sintering observation results according to the reduction of a catalyst, a Comparative Example of the present invention.
FIG. 11 is TEM-EDS observation results of Ru metal sintering according to the reduction of a catalyst, a Comparative Example of the present invention.
FIG. 12 is TEM-EDS observation results of Ru metal sintering according to the reduction of a catalyst, a Comparative Example of the present invention.

### [Mode for Invention]

Hereinafter, preferred embodiments of the present invention will be described in detail.

However, the following specific embodiments are only exemplary in describing the present invention in detail, and the present invention may be variously changed and may have various forms, so that the present invention is not limited to the specific exemplary embodiments. It is to be understood that the present invention includes all changes, equivalents, and alternatives falling within the spirit and scope of the present invention.

In addition, in the following description, many specific details, such as specific components, are described, and it will be apparent to those skilled in the art that the specific details are provided to facilitate a more general understanding of the present invention and that the present invention may be practiced without these specific details. In addition, in describing the present invention, when it is determined that detailed descriptions of , related known functions or configurations may unnecessarily obscure the gist of the present invention, the detailed descriptions will be omitted.

In addition, terms used in the present application are only used to describe specific embodiments, and are not intended to limit the present invention. Unless otherwise defined, all the terms used herein, including technical or scientific terms, have the same meanings as those commonly understood by those skilled in the art to which the present invention pertains. Terms such as those defined in a dictionary commonly used should be construed as having meanings consistent with meanings in the context of the related art, and should not be construed as having ideal or overly formal meanings unless explicitly defined in the present application.

In the present application, singular expressions include plural expressions unless the context clearly indicates otherwise.

In the present application, it should be understood that a term such as 'comprise,' 'contain,' or 'have' is intended to refer to the presence of a feature, component (or ingredient), or the like described in the specification, and is not intended to mean that one or more other features or components and the like are not present or cannot be added.

A ruthenium precursor compound of the present invention is a ruthenium precursor compound for providing ruthenium to an ammonia decomposition reaction catalyst, wherein the ruthenium precursor is represented by Formula 1 below:

[Formula 1] CₓH_{y}O_{z}NₘRuₙ

wherein X is an integer of 3 to 20, y is an integer of 0 to 32, z is an integer of 0 to 20, m is an integer of 0 to 10, and n is an integer of 1 to 3.

It has been problematic that a typical ruthenium precursor such as ruthenium chloride generates hydrogen chloride while undergoing a reduction treatment because the hydrogen chloride generated according to Reaction Formula 1 below corrodes the inside of a reactor, thereby degrading the durability of a device.

[Reaction Equation 1] 2RuCl₃ + 3H₂ → 2Ru + 6HCl

**[Table 1]**

| | Concentration of chloride (%) |
|---|---|
| w/o H₂ reduction | 5.35 |
| w/ H₂ reduction | 1.05 |

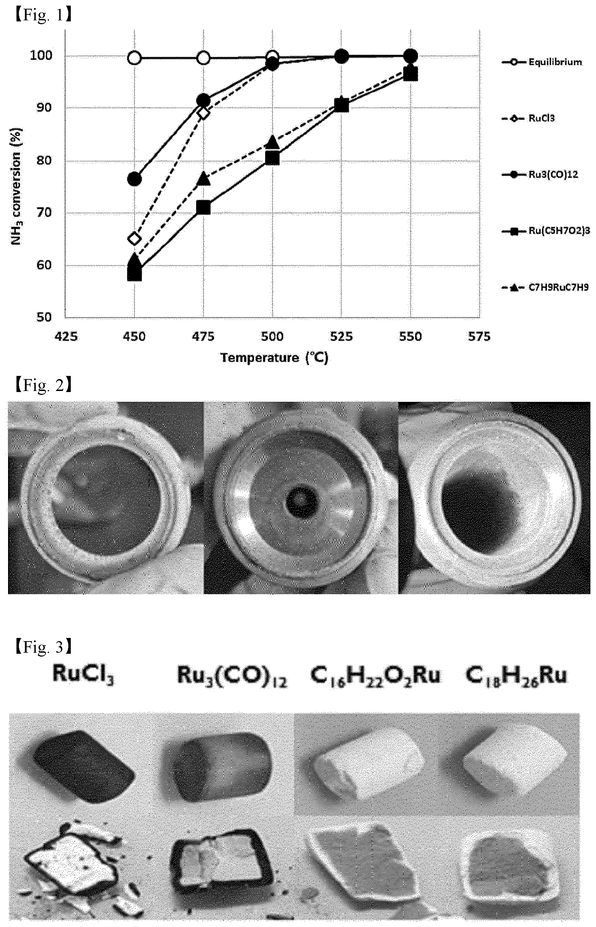

Table 1 shows the results of performing ion chromatography (IC) analysis to identify the presence of a catalyst phase of the Cl⁻ component and the decrease in the Cl⁻component following H₂ reduction treatment. From the results, it was confirmed that in a catalyst prepared using a RuCl₃ precursor, approximately 5% of a Cl⁻ component was supported on a catalyst phase during the preparation process, and that the amount of the Cl⁻ component decreased following the H₂ reduction treatment. FIG. 2 shows photographs of a gasket and the internal of a reactor contaminated by hydrogen chloride generated after reduction. Therefore, there was a need to replace a typical ruthenium precursor in order to solve the above problems.

Meanwhile, the ruthenium precursor compound of the present invention is a compound represented by Formula 1 above, the compound characterized by not including a halogen element, and since the ruthenium precursor compound does not contain chlorine in particular, hydrogen chloride is not generated even during a reduction treatment, unlike a ruthenium precursor such as ruthenium chloride. Therefore, the ruthenium precursor compound according to the present invention may prevent the generation of by-products affecting a reactor to solve a typical problem of degrading durability of a device and to achieve high economic feasibility.

In addition, a ruthenium precursor of the present invention may include a carbonyl group, an ester group, nitrile, a nitro group, an amine group, or a carboxyl group, and the ruthenium precursor may be ruthenium(III) nitrosyl nitrate, ruthenium(III) formate, ruthenium(III) acetate, ruthenium(III) propionate, ruthenium(III) butyrate, a ruthenium(III) nitrosyl nitrate solution, bis(ethyl cyclopentadienyl)ruthenium(II), bis(cyclopentadienyl)ruthenium(II), bis(2,4-dimethylpentadienyl)ruthenium(II), bis(cyclopentadienylruthenium dicarbonyl) dimer, but is not limited thereto.

Particularly, one or more carbonyls may be directly bonded to ruthenium, and preferably, 2 to 4 carbonyls may be bonded to ruthenium. The ruthenium precursor compound is preferably selected from ruthenium pentacarbonyl, triruthenium dodecacarbonyl, and a mixture thereof, but is not limited thereto.

In Formula 1 above, when the y and the m are 0, x=z may be satisfied. That is, the ruthenium precursor may have a formula of Ruₙ(CO)ₓ. A ruthenium precursor having the above formula may efficiently provide ruthenium to an ammonia decomposition catalyst, and thus, may exhibit high performance.

In addition, in the ruthenium precursor according to the present invention, ruthenium may form a coordination bond with at least one compound among an unsaturated compound, an aromatic compound, and a nitrogen oxide. Particularly, in the case of a ruthenium precursor composed of the above bond without containing a halogen such as chlorine, the performance of the catalyst may be improved without by-products.

The unsaturated compound may be a carbonyl compound, an enol compound, an ester compound, or a carboxylic acid compound, and the aromatic compound may be an aromatic cyclic hydrocarbon or an aromatic cyclic hydrocarbon having a substituent. The above ruthenium precursor is preferably selected from ruthenocene, octamethylruthenocene, ruthenium formate, ruthenium acetate, ruthenium propionate, ruthenium butyrate, tris(acetylacetonate)ruthenium, and a mixture thereof, but is not limited thereto.

In the case of RuCl₃, which is a typical ruthenium precursor, there is the result of studies that chlorine may remain in a catalyst after the preparation of the catalyst, and act as a poisonous substance of ruthenium ([Appl. Catal., A, 1992, 82, 1-12] Removal of chlorine ions from Ru_MgO catalysts for ammonia synthesis). The present inventors have confirmed that the performance of a catalyst improves when performing an experiment by increasing the reduction temperature of the catalyst to 600 to 700°C, and this is consistent with the result of the above papers that when a catalyst is prepared by using RuCl₃ as a precursor, the amount of residual chlorine component decreases as a reduction temperature increases, which leads to improved catalyst performance. On the contrary, the present invention uses a ruthenium precursor not containing a chlorine component, thereby not causing poisoning of ruthenium by chlorine, so that the performance of a catalyst may be significantly improved when compared to using a typical material.

In addition, the ammonia decomposition reaction catalyst provided with ruthenium through the ruthenium precursor of the present invention may be a catalyst in which a support is doped with a lanthanum group. The lanthanum group may be selected from the group consisting of La, Ce, Pr, Nd, Pm, Sm, Eu, Gd, Tb, Dy, Ho, Er, Tm, Yb, Lu, and a mixture thereof, but lanthanum (La) is preferred. In addition, the support may be alumina, SiO₂, CeO₂, ZrO₂, TiO₂, MgO, Al₂O₃, V₂O₅, Fe₂O₃, Co₃O₄, Ce-ZrOₓ, MgO-Al₂O₃, or a mixture thereof. Particularly, when ruthenium is introduced into lanthanum aluminate (LaAlO₃), in which alumina is doped with lanthanum, using the lanthanum precursor according to the present invention, an excellent ammonia conversion rate may be exhibited.

The ammonia reaction catalyst prepared by using the ruthenium precursor according to the present invention may have a ruthenium particle size of 10 nm or less, 8 nm or less, 5 nm or less, 4 nm or less, 3 nm or less, 2 nm or less, or 1 nm or less under reduction conditions of 650 to 1000°C, 700 to 900°C, or 800 to 900°C, and 60 to 100 hours, 70 to 90 hours, or 75 to 85 hours. The lowest limit of the particle size is not particularly limited, but may be 0.01 nm or greater, 0.1 nm or greater, or 0.5 nm or greater. That is, the ammonia reaction catalyst according to the present invention is characterized in that growth by sintering of a ruthenium metal at 650 to 1000°C, 700 to 900°C, or 800 to 900°C is significantly suppressed. As a result, the surface area of the metal is maximized, which allows the function of the catalyst to be efficiently exhibited. In addition, the above feature is a feature of a ruthenium-based catalyst prepared by using the ruthenium precursor according to the present invention, which is in contrast to the fact that an ammonia reaction catalyst prepared by using a ruthenium precursor containing chlorine, such as ruthenium chloride, is disadvantageous in high-temperature operation due to the growth of a ruthenium metal by sintering under the above reduction conditions.

Meanwhile, a method for preparing an ammonia decomposition reaction catalyst of the present invention is characterized by including (A) preparing a ruthenium precursor solution by dissolving a ruthenium precursor represented by Formula 1 below in a solvent, and (B) mixing a catalyst support and the ruthenium precursor solution to provide ruthenium to the catalyst support:

[Formula 1] CₓH_{y}O_{z}NₘRuₙ.

In Formula 1 above, x may be an integer of 3 to 20, y may be an integer from 0 to 32, z may be an integer from 0 to 20, m may be an integer from 0 to 10, and n may be an integer from 1 to 3.

The method for preparing an ammonia decomposition reaction catalyst according to the present invention has a technical feature in using a ruthenium precursor according to the present invention represented by Formula 1 described above. In the ammonia decomposition reaction catalyst containing ruthenium, it has been confirmed that even if the same ruthenium is introduced, depending on a ruthenium precursor used at the time of the introduction of the ruthenium, the performance of the catalyst may be significantly increased or decreased. Hereinafter, each step will be described in detail.

First, a ruthenium precursor represented by Formula 1 above is dissolved in a solvent to prepare a ruthenium precursor solution. The solvent may be selected from the group consisting of water, hexane, toluene, and a mixture thereof, and it is preferable that the water is pure water (D.I.water).

Next, a catalyst support and the ruthenium precursor solution are mixed to provide ruthenium to the catalyst support. As described above, the ruthenium precursor does not contain a halogen such as chlorine, and may include a carbonyl group, an ester group, a carboxyl group, nitrile, a nitro group, an amine group, or a carboxylic acid salt, and may include two or more functional groups thereof. In addition, in the ruthenium precursor, at least one carbonyl may be directly bonded to each ruthenium element, and preferably, 2 to 5 carbonyls, more preferably, 4 or 5 carbonyls may be bonded thereto.

In addition, the catalyst support may include a lanthanoid, preferably lanthanum (La). The catalyst support doped with a lanthanum group is preferably a powder type, a pellet type, or a monolith type in terms of the performance of the catalyst.

In addition, the method for preparing an ammonia decomposition reaction catalyst may further include, after Step (B), (C) removing liquid components by bathing, wherein the removing step may be performed under the conditions of 10 to 100°C, preferably 30 to 90°C, and more preferably 40 to 80°C for 1 hour to 6 hours, preferably 1 hour to 4 hours, and more preferably 1 hour to 3 hours, and an evaporator may be used. When the reaction temperature exceeds the above range, the solvent is volatilized too rapidly to allow components included in the precursor to be non-uniformly supported, and on the other hand, when less than the above range, the precursor is not sufficiently dissolved in the solvent, which may also cause the components included in the precursor to be non-uniformly supported.

In addition, the method for preparing an ammonia decomposition reaction catalyst of the present invention may further include, after Step (C), (D) drying, wherein the drying step may be performed under the conditions of 50 to 200°C, preferably 80 to 150°C, and more preferably 100 to 120°C for 8 hours to 16 hours, preferably 9 hours to 15 hours, and more preferably 10 hours to 12 hours. When the drying temperature exceeds the above range, due to non-uniform drying of the catalyst surface caused by too rapid drying, partially supported Ru may be lost.

A ruthenium-based ammonia decomposition reaction catalyst according to the present invention is characterized by including 100 molar parts of a ruthenium-based ammonia decomposition reaction catalyst, and 0.1 to 100 molar parts, preferably 2 to 60 molar parts, and more preferably 5 to 30 molar parts of lanthanum. When the content of lanthanum exceeds the above range, the specific surface area is significantly reduced, which may result in a decrease in the degree of dispersion of Ru, which is an active metal.

Meanwhile, the ammonia decomposition reaction catalyst according to the present invention is characterized by being prepared using the ruthenium precursor of the present invention, thereby containing ruthenium, and may be prepared by the method for preparing an ammonia decomposition reaction catalyst according to the present invention.

In addition, the ammonia decomposition reaction catalyst according to the present invention may include 100 parts by weight of a ruthenium-based ammonia decomposition reaction catalyst, and 0.01 to 5 parts by weight, preferably 0.02 to 3 parts by weight, and more preferably 0.1 to 2 parts by weight of ruthenium. When the parts by weight of ruthenium is less than the above range, the effect of improving catalyst performance is insignificant, and when greater than the above range, efficiency is reduced and a problem of high cost arises.

The ammonia decomposition reaction catalyst prepared as described above may exhibit an ammonia conversion rate of 65 to 100%, preferably 72 to 100%, and more preferably 76.5 to 100% under the following reaction conditions.
Experimental temperature (°C): 350 to 650°C, preferably 400 to 600°C, and more preferably 450 to 600°C
Reducing gas: 4 to 50% H₂/N₂
GHSV (ml/h·gcat): 1,000 to 100,000, preferably 1,000 to 50,000, and more preferably 1,000 to 10,000.

The ammonia conversion rate refers to the amount of ammonia gas decomposed relative to the amount of ammonia gas introduced.

This shows a significantly improved ammonia conversion rate compared to that of a typical ruthenium-based ammonia decomposition reaction catalyst prepared using ruthenium chloride as a ruthenium precursor, and the ammonia decomposition reaction catalyst of the present invention prevents the generation of by-products corroding a device, and at the same time, is a catalyst having significantly improved performance as a catalyst.

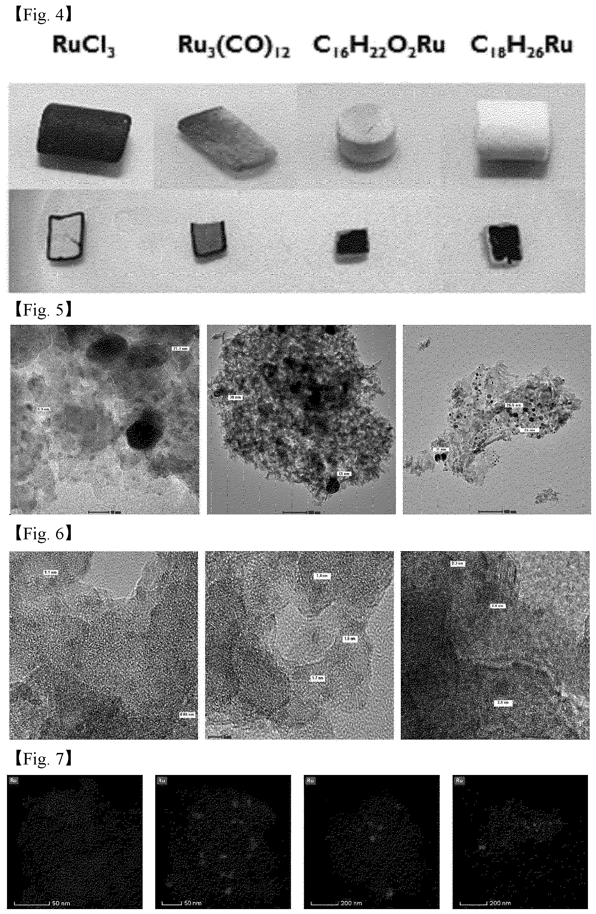

FIG. 3 shows images of the outside (first row) and inside (second row) of catalysts before a reaction, the catalysts prepared by varying a ruthenium precursor, and FIG. 4 shows images of the outside (first row) and inside of catalysts after the reaction, and from the left, the images respectively show the results when RuCl₃, Ru₃(CO)₁₂, C₁₆H₂₂O₂Ru, and C₁₈H₂₆Ru were used as a ruthenium precursor. Particularly, in the case of a catalyst prepared by using triruthenium dodecacarbonyl as a ruthenium precursor, the ruthenium precursor may be supported outside a pellet, so that a large amount of ruthenium may be present on the surface of the catalyst, and it can be seen that the ruthenium may be actively involved in the reaction of ammonia to greatly improve the conversion rate of the ammonia.

Hereinafter, embodiments of the present invention will be described.

### Examples

### Preparation Example 1: Preparation of lanthanum aluminate

A solution was prepared by mixing 63.72 g of lanthanum(III) nitrate hydrate 98.0% (SAMCHUN) with 200 mL of pure water (D.I. Water), and then bathed at 60°C. Thereafter, 60 g of a pellet-type gamma alumina (Al₂O₃) support (Alfa Aesar) was introduced into the solution, and then liquid components of the solution were removed by using an evaporator at 80°C for 2 hours. A sample was recovered, dried at 100°C for 12 hours, and then fired at 900°C for 5 hours to prepare lanthanum aluminate (LaAlO₃). Example 1: Preparation of ammonia decomposition reaction catalyst 1

As a ruthenium precursor, 2.130 g of Ru₃(CO)₁₂ (triruthenium dodecacarbonyl, DCR) was sufficiently dissolved in hexane, and then 49 g of a pellet-type lanthanum aluminate prepared in Preparation Example 1 was introduced thereto. Thereafter, liquid components in the solution were removed for 2 hours by using an evaporator at a bath temperature of 80°C. 50 g of the sample was recovered and dried at 100°C for 12 hours.

### Comparative Example 1: Preparation of ammonia decomposition reaction catalyst by using RuCl₃

An ammonia decomposition reaction catalyst was prepared in the same manner as in Example 1, except that RuC1₃ was used as the ruthenium precursor.

### Comparative Example 2: Preparation of ammonia decomposition reaction catalyst by using Ru(C₅H₇O₂)₃

An ammonia decomposition reaction catalyst was prepared in the same manner as in Example 1, except that Ru(C₅H₇O₂)₃ was used as the ruthenium precursor.

### Comparative Example 3: Preparation of ammonia decomposition reaction catalyst by using C₇H₉RuC₇H₉

An ammonia decomposition reaction catalyst was prepared in the same manner as in Example 1, except that C₇H₉RuC₇H₉ was used as the ruthenium precursor.

### Experimental Example 1: Evaluation of ammonia conversion rate of ammonia decomposition reaction catalyst

After filling the ammonia decomposition reaction catalyst (Ru/LaAlO₃) prepared in Example 1 and Comparative Examples 1 to 3 in a tubular reactor, a pre-treatment process of the catalyst was performed by reducing the catalyst for 4 hours in the range of 600 to 700°C while supplying 4 to 50% H₂/N₂ gas to the reactor. Thereafter, while supplying 4 to 50% H₂/N₂ gas, the temperature of a catalyst layer was dropped to 450°C, and maintained for preparation.

Ammonia gas was supplied thereto at a flow rate of 100 to 500 sccm, and the ammonia conversion rate was measured in the range of 450 to 550°C under the condition of 1,000 to 5000 ml/h·g_{cat} of GHSV (see FIG. 1). Particularly, ammonia conversion rate measurement results of Example 1 and Comparative Example 1, along with ammonia conversion rate results of a control example in an equilibrium state, are shown in Table 2 below.

**[Table 2]**

| | Ammonia conversion (%) | | | | |
|---|---|---|---|---|---|
| | 450°C | 475°C | 500°C | 525°C | 550° C |
| Equilibrium | 99.5 | 99.6 | 99.7 | 99.99 | 99.99 |
| Example 1 | 76.5 | 91.5 | 98.5 | 99.9 | 99.99 |
| Comparative Example 1 | 65.1 | 89.1 | 98.3 | 99.9 | 99.99 |

The ammonia decomposition reaction catalyst according to Example 1, that is, the catalyst prepared by using a Ru₃(CO)₁₂ compound, exhibited an excellent conversion rate throughout the temperature range, and particularly, had an ammonia conversion rate of 76.5% at 450°C, which is significantly excellent performance compared to the conversion rate of 65.1% obtained when using the ammonia decomposition reaction catalyst of Comparative Example 1 prepared by using ruthenium chloride (RuCl₃) as a precursor.

### Experimental Example 2: Observation of sintering according to reduction temperature (1)

The sintering of a Ru metal according to the reduction temperature and hold time of the Ru/LaAlO₃ catalyst prepared by Example 1 and Comparative Example 1 was observed. FIG. 5 and FIG. 6 respectively show results of observing the catalysts prepared by Comparative Example 1 and Example 1, and from the left, the images respectively show the results after reduction treatment performed under the conditions of 700°C (2 H), 800°C (80 H), 900°C (80 H), and the growth of the Ru metal was observed at various scale bars and positions.

From FIG. 5, it is observed that in the case of a catalyst using RuC1₃ as a precursor, the Ru metal grew in the range of 5 to 21 nm for a 700°C and 2 H reduction sample, and in the case of 800°C and 80 H reduction, the growth of Ru metal particles was observed up to 30 to 65 nm, and in the case of 900°C and 80 H reduction, most of the particles grew to 16 to 31 nm.

Meanwhile, from FIG. 6, it is observed that in the case of a catalyst using Ru₃(CO)₁₂ as a precursor, the Ru metal grew in the range of 0.9 to 1.1 nm for a 700°C and 2 H reduction sample, and in the case of 800°C and 80 H reduction, the growth of Ru metal particles was observed up to 1.4 to 1.7 nm, and in the case of 900°C and 80 H reduction, most of the particles grew to 2.3 to 2.9 nm.

From the above results, it is confirmed that the catalyst prepared using Ru₃(CO)₁₂ according to the present invention suppresses the growth of the Ru metal under the conditions in which high-temperature sintering is induced, and it can be expected that the catalyst may be stably operated under high-temperature conditions.

### Experimental Example 3: Observation of sintering according to reduction temperature (2)

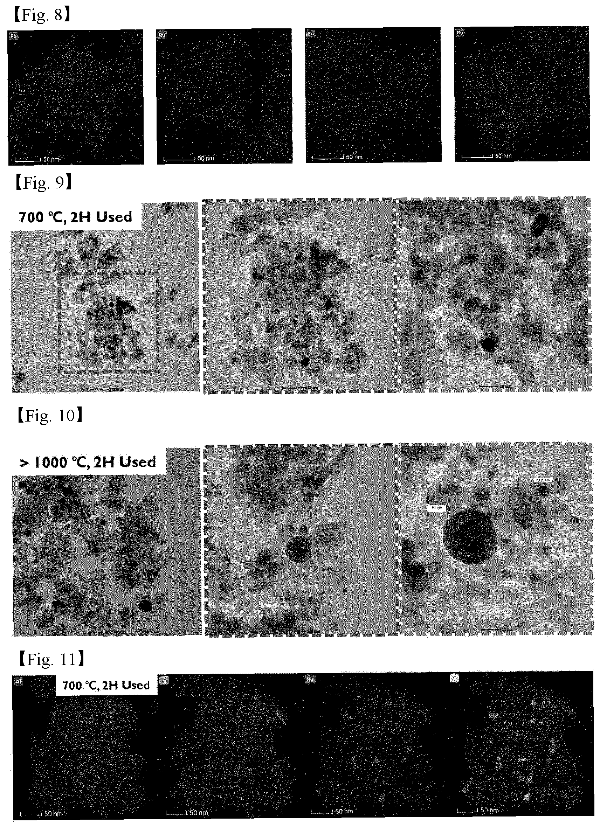

The sintering of a Ru metal according to the reduction temperature of a Ru/LaAlO₃ catalyst prepared by Example 1 and Comparative Example 1 was observed through TEM-EDS analysis. FIG. 7 and FIG. 8 respectively show results of observing the catalysts prepared by Comparative Example 1 and Example 1, and from the left, the images respectively show the result before reduction, and the results after reduction treatment performed under the conditions of 700°C, 800°C, and 900°C.

It was confirmed that in the case of Comparative Example 1, the growth of the Ru metal was achieved by sintering as the reduction temperature increased compared to before the reduction (FIG. 7), but in the case of Example 1, the growth of the Ru metal was suppressed even under the condition in which high-temperature sintering was induced. From the above, it can be seen that the Ru catalyst according to the present invention has excellent thermal stability, prevents performance decrease caused by sintering under high-temperature operation conditions, and maintains a large surface area, thereby exhibiting excellent performance as a catalyst.

### Experimental Example 4: Observation of sintering according to reduction temperature (3)

The sintering of a Ru metal according to the reduction and operation temperature (700°C and 1000°C) of a Ru/LaAlO₃ catalyst prepared by using RuC1₃ as a precursor according to Comparative Example 1 was observed (FIG. 9 and FIG. 10). FIG. 9 shows observation results after performing reduction treatment at 700°C for 2 hours, and FIG. 10 shows observation results after performing reduction treatment at 1000°C for 2 hours, and from the left, the images respectively show the sintering of the Ru metal with scale bar units at the bottom increased to the ranges of 100 nm, 50 nm, and 20 nm. A portion marked with a large dotted line box in the left image of FIG. 9 corresponds to the center image of FIG. 9 , and a small dotted line box in the left image of FIG. 9 corresponds to the right image of FIG. 9. In addition, a portion marked with a large dotted line box in the left image of FIG. 10 corresponds to the center image of FIG. 10 , and a small dotted line box in the left image of FIG. 10 corresponds to the right image of FIG. 10.

In the case of a 700°C reduction operation sample, the Ru metal grew in the range of 5 to 21 nm, and in the case of a sample operated at 1000°C or higher, the Ru metal grew in the range of 9 to 58 nm. The increase in metal diameter as described above causes a decrease in metal surface area, and may be a direct cause of a decrease in catalyst performance.

### Experimental Example 5: Observation of sintering according to reduction temperature (4)

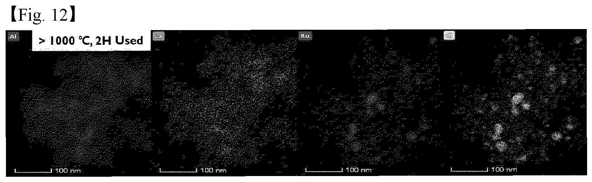

The sintering of a Ru metal according to the reduction and operation temperature (700°C and 1000°C) of a Ru/LaAlO₃ catalyst prepared by using RuC1₃ as a precursor according to Comparative Example 1 was observed through TEM-EDS analysis (FIG. 11 and FIG. 12). FIG. 11 shows the result of reduction treatment at 700°C for 2 hours, and FIG. 12 shows the result of reduction treatment at 1000°C for 2 hours, and from the left, the images respectively show the results of observing Al, La, Ru, and Cl.

It was confirmed that the Ru metal showed pronounced growth in a sample operated at 1000°C or higher compared to a sample operated at 700°C reduction. In addition, it was confirmed that Ru and Cl were distributed in similar positions, through which it was determined that the presence of Cl had a direct or indirect effect on the growth of Ru.

Although the preferred embodiments of the present invention have been described, the present invention is not limited to the specific embodiments described above, and various modifications may be made by those skilled in the art without departing from the scope of the present invention. Therefore, the scope of the present invention should not be construed as being limited to the above embodiments, but should be defined by the following claims as well as equivalents thereof.

## Claims

1. A ruthenium precursor compound for providing ruthenium to an ammonia decomposition reaction catalyst, wherein the ruthenium precursor is **characterized by** being represented by Formula 1 below:
[Formula 1] CₓH_{y}O_{z}NₘRuₙ
wherein, in Formula 1 above, x is an integer of 3 to 20, y is an integer from 0 to 32, z is an integer from 0 to 20, m is an integer from 0 to 10, and n is an integer from 1 to 3.

2. The ruthenium precursor compound of claim 1, wherein the ruthenium precursor is **characterized by** comprising a carbonyl group, an ester group, a carboxyl group, nitrile, a nitro group, an amine group, or a carboxylate.

3. The ruthenium precursor compound of claim 1, wherein the ruthenium precursor is **characterized in that** ruthenium forms a coordination bond with at least one compound among an unsaturated compound, an aromatic compound, and a nitrogen oxide.

4. The ruthenium precursor compound of claim 1, wherein the ammonia decomposition reaction catalyst is **characterized by** comprising a support doped with a lanthanoid.

5. A method for preparing a ruthenium-based ammonia decomposition reaction catalyst, the method comprising:
(A) preparing a ruthenium precursor solution by dissolving a ruthenium precursor represented by Formula 1 below in a solvent; and
(B) mixing a catalyst support and the ruthenium precursor solution to provide ruthenium to the catalyst support:
[Formula 1] CₓH_{y}O_{z}NₘRuₙ
wherein, x is an integer of 3 to 20, y is an integer of 0 to 32, z is an integer of 0 to 20, m is an integer of 0 to 10, and n is an integer of 1 to 3.

6. The method of claim 5, further comprising, after Step (B), (C) removing liquid components by bathing.

7. The method of claim 5, wherein the ruthenium-based ammonia decomposition reaction catalyst is **characterized by** comprising:
100 molar parts of a ruthenium-based ammonia decomposition reaction catalyst; and
0.1 to 100 molar parts of lanthanum.

8. A ruthenium-based ammonia decomposition reaction catalyst prepared according to any one of claims 5 to 7.

9. The ruthenium-based ammonia decomposition reaction catalyst of claim 8, wherein the ruthenium-based ammonia decomposition reaction catalyst is **characterized by** comprising:
100 parts by weight of a ruthenium-based ammonia decomposition reaction catalyst; and
0.01 to 5 parts by weight of ruthenium.
